# EUROPÄISCHE PATENTSCHRIFT

(11) **EP 2 105 462 B1**
(45) Veröffentlichungstag und Bekanntmachung des Hinweises auf die Patenterteilung: **07.05.2014**
(21) Anmeldenummer: 09152976.8
(22) Anmeldetag: 17.02.2009
(51) Int. Cl.: C08L 21/00, C08K 5/548, B60C 1/00

(54) **Kautschukmischung und daraus hergestellte Reifen**
Rubber composition and tyres made from same
Composition de caoutchouc et pneu ainsi fabriqué

(30) Priorität: 28.03.2008 DE 102008016338
(43) Veröffentlichungstag der Anmeldung: 30.09.2009
(73) Patentinhaber: Continental Reifen Deutschland GmbH, 30165 Hannover (DE)
(72) Erfinder: Tkachenko, Vikoriya, 30171 Hannover (DE); Müller, Norbert, Dr., 29336 Nienhagen (DE); Wagemann, Jürgen, Dr., 31162 Bad Salzdetfurth (DE)
(74) Vertreter: Finger, Karsten

(56) Entgegenhaltungen:
- EP-A1- 1 270 657
- EP-A1- 1 470 937
- EP-A1- 1 640 182
- WO-A1-2007/019561
- US-A1- 2005 277 717

## Beschreibung

Die vorliegende Erfindung betrifft vernetzbare Kautschukmischungen, insbesondere für Reifen und Laufstreifen von Reifen, enthaltend zumindest einen Dienkautschuk, zumindest einen polaren Füllstoff und eine Kombination von i) einem Mercaptosilan und ii) einem Harz. Die Erfindung stellt weiterhin Laufstreifen und Reifen, insbesondere Luftreifen, bereit, diese vulkanisierten Kautschukmischungen zumindest teilweise enthaltend. Schließlich richtet sich die vorliegende Erfindung auf technische Gummiartikel, die zumindest zum Teil aus der vulkanisierten Kautschukmischung bestehen.

### Technischer Hintergrund

Die Verbesserung der Fahreigenschaften von Reifen, insbesondere Fahrzeugluftreifen, ist seit jeher Ziel bei der Entwicklung neuer Kautschukzusammensetzungen. Die Fahreigenschaften der Reifen hängen dabei unter anderem stark von der Kautschukzusammensetzung des Laufstreifens ab, so dass hohe Anforderungen an die Zusammensetzung der Laufstreifen gestellt werden. Obwohl durch Einsatz von auf Siliziumoxid basierenden Füllstoffen anstelle von Ruß die Fahreigenschaften in den vergangenen Jahren insgesamt auf ein höheres Niveau gebracht werden konnten, existieren nach wie vor die bekannten Zielkonflikte zwischen den einzelnen Anforderungen die an einen Reifen gestellt werden, wie z.B. zwischen den Eigenschaften Rollwiderstand und Nassbremsen. Eine Verbesserung des Nassgriffes führt in der Regel zur Verschlechterung des Rollwiderstandes, der Wintereigenschaften und des Abriebsverhaltens. Es wurden bereits verschiedenste Versuche unternommen, diesen Zielkonflikt zwischen Rollwiderstand und Nassbremsen zu verschieben bzw. zu lösen. So wurde vorgeschlagen, modifizierte Polymere, Weichmacher, verschiedenste Formen von hochdispersen Füllstoffen aber auch weitere Zusatzstoffe, wie Harze oder Mercaptosilane einzusetzen.

So beschreibt die EP 1 529 806 den Einsatz von flüssigem Polybutadien, um das Abriebverhalten und den Nassgriff sowie die Traktion auf Eis und Schnee zu verbessern, bei gleichzeitig gutem Trockenbremsen.

Die DE 10 2005 057 801 beschreibt Mercaptosilane, die ggf. geschützt sein können, geeignet für den Einsatz in Kautschukmischungen insbesondere zur Verringerung des Hystereverlustes bei gleichzeitig hohem Abriebwiderstand. Mercaptosilane sind weiterhin aus der WO99/09036 bekannt. Weitere geschützte Mercaptosilane und deren Verwendung in Kautschukmischungen sind in der WO2002/048256 und der WO2006/015010 beschrieben.

WO2007/019561 offenbart eine Kautschukmischung für Reifenlaufflächen mit maximalem Abriebwiderstand, maximalem Nassgriff und mit minimalem Rollwiderstand. Es werden vulkanisierbare Kautschukmischungen zur Herstellung von Reifenlaufflächen aus Kautschuk, Silica, Silan-Kupplungsmittel, das auch ein Merkaptosilan sein kann, und Harz beschrieben.

EP-A-1 640 182 offenbart vulkanisierbare Kautschukmischungen zur Herstellung von Reifenlaufflächen aus Kautschuk, Silica, Silan-Kopplungsmittel, das auch ein Merkaptosilan sein kann, und Harz.

US-A-2005/277717 offenbart vulkanisierbare Kautschukmischungen zur Herstellung von Reifenlaufflächen aus Kautschuk, Silica, blockiertem Merkaptosilan und Harz.

EP-A-1 470 937 offenbart vulkanisierbare Kautschukmischungen zur Herstellung von Reifen aus Kautschuk, Silica, Silan-Kopplungsmittel, das ein Merkaptosilan sein kann, und Harz.

EP-A-1 270 657 offenbart eine Kautschukmischung für Reifenlaufflächen mit weniger Abrieb, höherem Nassgriff und weniger Rollwiderstand. Es werden vulkanisierbare Kautschukmischungen zur Herstellung von Reifenlaufflächen aus funktionalisiertem Dienkautschuk, Silica und Merkaptosilan beschrieben.

Ein Einsatz von Mercaptosilan, der zu einer Erniedrigung des Rollwiderstandes und des Wärmeaufbaus führt, zeigte gleichzeitig eine Verschlechterung des Nassbremsverhaltens. Umgekehrt führte bei Zugabe eines Harzes als Additiv dieses zu einer Verbesserung des Nassbremsverhaltens, während der Rollwiderstand verschlechtert wird. Es zeigte sich außerdem, dass bei Zugabe von Harzen oder Mercaptosilanen in ungeschützter oder in geschützter Form, dieses zu einer Verschlechterung der Füllstoffverteilung im Vergleich zur Referenzmischung führt. Hieraus resultiert eine Verschlechterung des Abriebwiderstandes der vulkanisierten Mischung.

Der vorliegenden Erfindung liegt nun die Aufgabe zugrunde, Kautschukmischungen, insbesondere für Laufstreifen und Reifen bereitzustellen, die sowohl eine Verbesserung der Nassbremseigenschaften als auch des Rollwiderstandes aufzeigen, wobei der Abriebwiderstand nicht verschlechtert wird. Für die Eigenschaften Rollwiderstand und Nassbremsen soll ein besonders hohes Gesamtniveau erzielt werden.

### Beschreibung der Erfindung

Gelöst wird die Aufgabe erfindungsgemäß dadurch, dass die Kautschukmischung zumindest einen Dienkautschuk, zumindest einen polaren Füllstoff, und eine Kombination von i) einem Mercaptosilan und ii) einem Harz enthält.

Überraschenderweise wurde gefunden, dass bei gleichzeitigem Einsatz von Harz und Mercaptosilan, das ggf. geschützt sein kann, der Zielkonflikt zwischen Nassbremsverhalten und Rollwiderstand deutlich verschoben werden kann. Das heißt, die positive Wirkung des Mercaptosilans auf eine Verringerung des Rollwiderstandes und des Wärmeaufbaus von Laufstreifenmischungen kann kombiniert werden mit dem positiven Einfluss des Harzes auf das Nassbremsverhalten. Dabei sind die sonst zu beobachtenden negativen Einflüsse des Mercaptosilans bzw. des Harzes auf die entsprechenden anderen Eigenschaften, Rollwiderstand bei Harz und Nassbremsen beim Mercaptosilan, nicht vorhanden. Die gleichzeitige Zugabe von Harz und Mercaptosilan erlaubt also eine Verbesserung von sowohl dem Nassbremsverhalten, als auch dem Rollwiderstand sowie dem Wärmeaufbau, Eigenschaften, die ansonsten im Zielkonflikt stehen.

Darüber hinaus wurde überraschend festgestellt, dass die Füllstoffverteilung und damit der Abriebwiderstand bei der Kombination von Harz mit Mercaptosilan gegenüber Kautschukmischungen bei denen diese Komponenten nur einzeln vorhanden sind überraschend gut sind und damit der Abriebwiderstand deutlich verbessert ist.

Auch die anderen Reifeneigenschaften bleiben auf einem hohen Niveau, so dass erfindungsgemäß Reifen, insbesondere Luftreifen, und Laufstreifen für Reifen bereitgestellt werden können, enthaltend die erfindungsgemäße Kautschukmischung, die sowohl ein verbessertes Abriebverhalten und Rollwiderstandverhalten aufzeigen, als auch ein verbessertes Nassbremsen und somit den bekannten Zielkonflikt zwischen Rollwiderstand und Nassbremsverhalten in eine gewünschte positive Richtung verschiebt.

Die Verbesserung der Füllstoffverteilung in der Kautschukmischung zeigt sich durch eine Erniedrigung des Payne-Effektes. Der Payne-Effekt stellt eine Füllstoff Füllstoff Wechselwirkung dar. Der Payne-Effekt zeigt sich z. B. durch eine visko-dynamische Prüfung, z.B. mit einem Eplexor, Gabo bei 55°C gemäß DIN 55513, als Steifigkeitsabfall über eine zunehmende Dehnung beschrieben durch Delta E'relativ = E'(8%) - E'(0,15%). Je größer der Delta E'relativ-Wert, umso größer ist der Payne-Effekt und umso schlechter die Füllstoffverteilung. Je schlechter die Füllstoffverteilung aber ist, umso schlechter ist auch der Abriebswiderstand.

Nur durch den zeitgleichen Einsatz von beiden Komponenten Harz und Mercaptosilan, das ggf. geschützt sein kann, wird der Payne-Effekt verkleinert, im Gegensatz zum Einsatz nur einer dieser Komponenten. Eine Kombination der beiden Komponenten, Mercaptosilan und Harz, führt zu einer Verbesserung der Füllstoffverteilung und damit auch zu einer Verbesserung des Abriebwiderstandes.

Die erfindungsgemäße Kautschukzusammensetzung ist aber nicht nur im Laufstreifen, sondern auch im Körper der Reifen einsetzbar. Daher betrifft ein weiterer Aspekt der vorliegenden Erfindung einen Reifen, der zumindest zum Teil aus einer erfindungsgemäßen, vulkanisierten Kautschukmischung besteht.

Die erfindungsgemäßen Kautschukmischungen sind aber auch für andere technische Gummiartikel, wie Gurte und Riemen, insbesondere Zahnriemen, Keilriemen, Zahnrückriemen, Flachriemen, Fördergurte und bei den genannten Artikeln insbesondere die Laufseiten davon, geeignet.

In bevorzugten Ausführungsformen wird das Harz in einer Menge von 0,1 bis 30 phr eingesetzt. Bevorzugt liegt die Menge an eingesetzten Harzen bei 1 bis 15 phr (parts per hundred parts rubber by weight). Es können die üblichen Harze, die in Kautschukmischungen eingesetzt werden, verwendet werden. So können folgende Harze eingesetzt werden: Kohlenwasserstoffharze auf Basis von z.B. Terpenphenol (wie Sylvares TR B115 von Arizon Chemical Products), Polyterpen (Kolophonium), α-Limonen, β-Pinen. Inden-Cumaron-Harze, Phenolharze, Pentaerythritester.

Die Menge an Mercaptosilan ist bevorzugt 0,1 bis 30 phr, wie 0,5 bis 25 phr, bevorzugt 1 bis 18 phr und besonders bevorzugt 5 bis 17 phr, z.B. 12 phr.

In einer weiteren bevorzugten Ausführungsform wird als Mercaptosilan ein geschütztes Mercaptosilan verwendet.

Geeignete Mercaptosilane und insbesonders geeignete geschützte Mercaptosilane werden z. B. in der DE 10 2005 057 801 beschrieben. Auch geschützte Mercaptosilane, wie sie z. B. aus der WO 99/09036 bekannt sind, können erfindungsgemäß eingesetzt werden. So sind besonders geeignete, geschützte Mercaptosilane solche, wie sie in der WO2002/048256 und in der WO2006/015010 beschrieben sind. Diese geschützten Mercaptosilane werden unter dem Handelsnamen NXT Silane von Momente Performance Materials, ein GE-Unternehmen, vertrieben. Dabei sind sowohl die NXT-Silane, als auch die NXT lo-wV und NXT Ultra-LowV-, wie auch die NXT Z-Silane geeignet. Diese sind insbesondere auch bei der Verarbeitung vorteilhaft einsetzbar.

Die hierin verwendete Angabe phr (parts per hundred parts of rubber by weight) ist eine in der Kautschukindustrie übliche Mengenangabe für Mischungsrezepturen. Diese Dosierung der Gewichtsteile der einzelnen Substanzen wird dabei stets auf 100 Gewichtsteile der gesamten Masse aller in der Mischung vorhandenen Kautschuke bezogen. Wie oben bereits ausgeführt, ist eine andere übliche Angabe phf (parts per hundred parts of filler by weight). Hierbei werden die Gewichtsteile der einzelnen Substanzen auf 100 Gewichtsteile der gesamten Masse an Füllstoffen bezogen.

Die erfindungsgemäße Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe bestehend aus Naturkautschuk (NR), synthetisches Polyisopren (ER), Polybutadien (BR), Propylen-Ethylen-Kautschuk (PE), Styrol-Butadien-Kautschuk (SBR), insbesondere emulsionspolymerisierter Styrol-Butadien-Kautschuk (ESBR) und lösungspolymerisierter Styrol-Butadien-Kautschuk (SSBR), Ethylen-Propylen-Dien-Kautschuk (EPDM), Halobutylkautschuk (HBR), Chloroprenkautschuk (CR), Isopren-Butadien-Kautschuk (IBR) und Styro-Isopren-Butadien-Terpolymer. Diese Dienelastomere lassen sich gut zu der erfindungsgemäßen Kautschukmischung verarbeiten und ergeben in dem vulkanisierten Reifen gute Reifeneigenschaften.

Besonders bevorzugt ist ein Dienkautschuk in der Kautschukmischung ein emulsionspolymerisierter Styrol-Butadien-Kautschuk und/oder eine Lösung zu polymerisiertem Styrol-Butadien-Kautschuk.

Wenn die Kautschukmischung als Dienkautschuk Polyisopren (IR) enthält, kann es sich hierbei sowohl um cis 1,4-Polyisopren als auch um 3,4-Polyisopren handeln. Handelt es sich bei dem Dienkautschuk um ein Naturkautschuk (NR), so liegt dessen Anteil bevorzugt unter 60 phr.

Wie oben ausgeführt, kann es sich bei dem Styrol-Butadien-Kautschuk um ein Lösungsmittel polymerisiertem Styrol-Butadien-Kautschuk (SSBR) mit einem Styrolgehalt bezogen auf das Polymer von circa 10 bis 50 Gew.-% und einem Vinylgehalt (Gehalt an 1,2-gebundenem Butadien, bezogen auf das gesamte Polymer) von 10 bis 70 Gew.-% handeln. Dieser wird z. B. unter Verwendung von Lithiumalkylen im organischen Lösungsmittel hergestellt. Die SSBR können auch gekoppelt und Endgruppen - modifiziert sein. Es können aber auch emulsionspolymerisiertes Styrol-Butadien-Kautschuk (ESBR) sowie Mischungen aus ESBR und SSBR eingesetzt werden. Der Styrolgehalt des ESBR beträgt circa 15 bis 50 Gew.-% und es können die aus dem Stand der Technik bekannten Typen, die durch Copolymerisation von Styrol und 1,3-Butadien in wässriger Emulsion erhalten werden, verwendet werden.

In einer weiteren bevorzugten Ausführungsform wird ein Hoch-Vinyl BR mit einem Vinylanteil von <90 Gew.-%, insbesondere einem Vinylanteil von 40 bis 85 Gew.-% verwendet. Das Hoch-Vinyl BR kann z.B. anstatt des SSBR und/oder ESBR eingesetzt werden.

Die Dienkautschuke können aber auch Mischungen mit anderen Kautschuktypen, wie z. B. Styrol-Isopren-Butadien-Terpolymer, Butylkautschuk, Halobutylkautschuk oder Ethylen-Propylen-Dien-Kautschuk (EPDM) sein. Andere bekannte polare und unpolare Kautschuke können ebenfalls in der Mischung vorliegen.

In einer Ausführungsform ist der Dienkautschuk ein zumindest teilweise ein funktionalisierter Dienkautschuk

Bevorzugte Funktionalisierungen dieser Dienkautschuke sind solche mit einer polaren oder polar reaktiven Gruppe. Insbesondere handelt es sich bei den Funktionalisierungen um Funktionalisierungen mit Hydroxylgruppen und/oder Epoxidgruppen und/oder Siloxangruppen und/oder Aminogruppen und/oder Aminosiloxangruppen und/oder Carboxylgruppen und/oder Phthalocyaningruppen. Es kommen aber auch noch weiteren, dem Fachmann bekannte, Funktionalisierungen in Frage.

Die Funktionalisierungen können sowohl am Kettenende als auch in der Kette vorliegen.

Zum Beispiel kann eine Funktionalisierung mittels eines funktionalisierten Starters und/oder durch Kettenabbruch eingebracht werden. Geeignete Verfahren und Gruppen sind aus dem Stand der Technik bekannt. Eine Funktionalisierung kann die hohe Bindungskraft zwischen Kautschuk und Füllstoff verbessern.

Erfindungsgemäß weist die Kautschukmischung weiterhin einen polaren Füllstoff auf. Als polaren Füllstoff können alle dem Fachmann bekannten Füllstoffe, wie Aluminiumhydroxid und Schichtsilikate verwendet werden. Bevorzugt werden als polare Füllstoffe jedoch Siliziumoxid-basierende Füllstoffe, wie Silika und Kieselsäure eingesetzt.

Insbesondere wird als polarer Füllstoff Kieselsäure verwendet, geeignete Siliziumoxidbasierende Füllstoffe, insbesondere Kieselsäure, sind im Stand der Technik bekannt.

Die Menge an polaren Füllstoffen ist bevorzugt 0,1 phr bis 200 phr.

Bevorzugte Kieselsäuren sind fein verteilte, gefällte Kieselsäuren, die z. B. eine Stickstoffoberfläche (BET-Oberfläche) (gemäß DIN 66131 und 66132) von 35 bis 350 m², vorzugsweise von 115 bis 230 m² und eine CTAB-Oberfläche (gemäß ASTM D 3765) von 30 bis 350 m², vorzugsweise von 120 bis 285 m², aufweisen.

Derartige Kieselsäuren führen z.B. in Kautschukmischungen für Reifenlaufstreifen zu besonders guten physikalischen Eigenschaften der Vulkanisate. Als Kieselsäuren können somit z.B. sowohl jene des Typs VN3 (Handelsname) der Firma Degussa als auch hochdispergierte Kieselsäuren, sogenannte HD-Kieselsäuren (z.B. Ultrasil 7000 der Firma Degussa), zum Einsatz kommen.

Erfindungsgemäß können aber auch weitere Füllstoffe, wie insbesondere, Ruß eingesetzt werden. Ruß wird dabei bevorzugt in einer Menge von 0,1 phr bis 160 phr verwendet. Die verwendeten Ruße sind Ruße, wie sie allgemein in Kautschukmischungen eingesetzt werden. Bevorzugt weisen die Ruße dabei die folgenden Charakteristika auf: DBP-Zahl (gemäß ASTM D 2414) 90 bis 200 mL/100 g, CTAB-Zahl (gemäß ASTM D 3765) 80 bis 170 m² und Iodabsorptionszahl (gemäß ASTM D 1510) 10 bis 250 g/kg.

Zur Verbesserung der Verarbeitbarkeit und zur Anbindung der Kieselsäure und anderer ggf. vorhandener polarer Füllstoffe an den Dienkautschuk werden insbesondere die genanten Mercaptosilane als Kupplungsagenzien in Kautschukmischungen eingesetzt werden. Die Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als weitere Silan-Kupplungsagenzien neben dem erfindungsgemäßen Mercaptosilan können dabei alle dem Fachmann für die Verwendung in Kautschukmischungen bekannten weiteren Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. So können als weitere Silan-Kupplungsagenzien z. B. 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruss (Handelsname X50S der Firma Degussa) oder durch bereits mit Silan modifizierte Kieselsäure (z.B. Handelsname Coupsil der Firma Evonik, ehemals Degussa) zugesetzt werden.

Die Kautschukmischung kann außerdem noch andere Füllstoffe, wie beispielsweise Aluminosilicate, Kreide, Stärke, Magnesiumoxid, Titandioxid oder Kautschukgele enthalten.

Bevorzugt wird als Weichmacher Mineralöl eingesetzt, alternativ oder zusätzlich können auch flüssige Polymere verwendet werden, die sich u. a. als Ersatzstoffe für Mineralöle als Weichmacher eignen. Die Weichmacher, bevorzugt Mineralöle, werden in einer Menge von 1 bis 160 phr, wie 5 bis 75 phr, insbesondere 10 bis 60 phr eingesetzt. Die flüssigen Polymere, wie z.B. flüssiges Polybutadien, weisen entsprechend Mengen von 0 bis 160 phr, wenigstens aber 0,1 phr, wie 5 bis 75 phr, insbesondere 10 bis 60 phr auf.

Die Kautschukmischung kann außer den genannten Substanzen noch andere Zusatzstoffe, wie z. B. MES (mild extraction solvate), RAE (residual aromatic extract) oder TDAE (treated distillate aromatic extract) oder Rapsöl aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung andere vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Des Weiteren liegen in der Kautschukmischung übliche Aktivatoren vor. Diese Aktivatoren können Zinkoxid und Fettsäuren oder Zinkseifen auf Basis von Zinkoxid und Fettsäuren sein. Alternativ können Gemische aus Zinkoxid und Metallacrylat und/oder Metallmethacrylat eingesetzt werden. Diese werden bevorzugt in einer Menge von 0,1 bis 3,0 phr an Zinkoxid und in einer Menge von 0,1 bis 3,0 phr an Metallacrylat und/oder Metallmethacrylat eingesetzt.

Bei Verwendung von DPG sind insbesondere im Hinblick auf einem bei der Produktion unkritischen Vulkanisationsverhalten Mischungen vorteilhaft, deren Gehalt an DPG folgender ist: (phr Silika x BET Silika)/phr DPG > 4500 und < 7500.

In einer bevorzugten Ausführungsform enthält die Kautschukmischung die folgende Zusammensetzung:
0 bis 40 phr BR,
0 bis 40 phr NR,
50 bis 100 phr ESBR und/oder SSBR,
0,1 bis 200 phr Kieselsäure,
0 bis 80 phr Ruß,
0,1 bis 30 phr Mercaptosilan,
0,1 bis 30 phr Harz,
1.0 bis 160 phr Weichmacher.

Die Herstellung der erfindungsgemäßen Kautschukmischung erfolgt auf herkömmliche Art und Weise in zwei Stufen, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird, z.B. mit einem ineinander geführten Innenmischer, und im Anschluss durch Zugabe des Vulkanisationssystems die Fertigmischung auf einem tangierenden Mischer erzeugt wird. Das spezielle Prozesshilfsmittel wird der Fertigmischung zugegeben. Anschließend wird die Mischung weiterverarbeitet, z.B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die auf diese Weise mit der erfindungsgemäßen Mischung hergestellten Reifen zeigen gute Eigenschaften.

Die Erfindung wird nun anhand von Vergleichs- und Ausführungsbeispielen, die in den Tabellen 1 und 2 zusammengefasst sind, näher erläutert werden.

Die Vergleichsmischungen sind mit V gekennzeichnet, die erfindungsgemäße Mischung ist mit E gekennzeichnet. Die Vergleichsmischung V1 ist eine Mischung ohne Harz und ohne Mercaptosilan. Die Mischungen V2 und V3 sind Mischungen mit Harz (V2) bzw. Mercaptosilan (V3) alleine. In der Kautschukmischung E1 sind sowohl Harz als auch Silan enthalten.

**Tabelle 1**

| | V1 | V2 | V3 | E1 |
|---|---|---|---|---|
| NR | 5 | 5 | 5 | 5 |
| BR | 15 | 15 | 15 | 15 |
| SSBR | 80 | 80 | 80 | 80 |
| N121 | 5 | 5 | 5 | 5 |
| Kieselsäure | 75 | 75 | 75 | 75 |
| Silan mit 75% S2 | 6,5 | 6,5 | | |
| Mercaptosilan | | | 8,9 | 8,9 |
| Öl | 15 | 10 | 15 | 10 |
| Harz | | 5 | | 5 |
| Prozessadditive und | 16,2 | 16,2 | 16,2 | 16,2 |
| Alterungsschutzmittel | | | | |
| Vulkanisierungschemikalien | 4,5 | 4,5 | 4,8 | 4,8 |
| Löslicher Schwefel OT 1 | 1,7 | 1,7 | 1,8 | 1,8 |
| Summe | 223,9 | 223,9 | 226,7 | 226,7 |

Als Harz wurde ein Terpenharz, Sylvares TR B 115 von Arizona Chemical Products eingesetzt.
NR: Bukit Mertaja,
BR: Lanxess
SSBR: HPR 355H, JSR Corporation
S2 Silan: Sliquest A-1589, GE Speciality
Kieselsäure: Zeosil 1165 MP, Rhodia Ltd.
Ö1: TDAE, Klaus Dahleke KG
Mercaptosilan: NXT Low V von Momente Performance Materials

Für die in der Tabelle 2 dargestellten Untersuchungen wurden Prüfkörper verwendet. Für die Tests an Prüfkörpern wurden folgende Testverfahren angewendet:
- Zugfestigkeit bei Raumtemperatur gemäß DIN 53504
- Reißdehnung bei Raumtemperatur gemäß DIN 53504,
- Spannungswerte bei 100, 200 und 300 % Dehnung bei Raumtemperatur gemäß DIN 53504
- Bruchenergiedichte bestimmt im Zugversuch nach DIN 53504, wobei die Bruchenergiedichte, die bis zum Bruch erforderliche Arbeit bezogen auf das Volumen der Probe ist.
- Shore A Härte bei Raumtemperatur und 70°C gemäß DIN 53505
- Rückprallelastizität (Rebound) bei Raumtemperatur und 70°C gemäß DIN 53512
- Eplexor gemäß DIN 53 513
- Abrieb gemäß DIN 53516.

Der Rebound (Rückprallelastizität) bei 70°C dient als Prädiktor für den Rollwiderstand bzw. den Wärmeaufbau von in Reifen verwendeten Mischungen. Je größer dieser Wert, desto niedriger der Rollwiderstand/Wärmeaufbau innerhalb eines Reifens.

Der Rebound (Rückprallelastizität) bei Raumtemperatur ist ein gängiger Indikator für das Nassbremsverhalten, je kleiner dieser Wert, umso besser der Nassgriff von Laufstreifenmischungen.

Bei dem Rating der einzelnen Eigenschaften werden die Reifeneigenschaften des Reifens mit der Mischung V1 = 100 gesetzt. Werte größer als 100 bedeuten eine Verbesserung der entsprechenden Eigenschaft

**Tabelle 2**

| | | | V1 | | V2 | V3 | E1 |
|---|---|---|---|---|---|---|---|
| Vulkanisation | | | 02300 | | 02400 | 03300 | 02500 |
| Temperatur (Celsius) | | | 160 | | 160 | 160 | 160 |
| Zeit (min) | | | 20 | | 20 | 20 | 20 |
| | | | | | | | |
| Rückprallelastizität RT | Prozent | | 29,8 | | 26,6 | 30,6 | 26,7 |
| **Rückprallelastizität RT-Rating** | **Prozent** | | **100** | | **112** | **97** | **112** |
| | | | | | | | |
| Rückprallelastizität 70°C | Prozent | | 58,3 | | 57,3 | 60,1 | 59,3 |
| | | | | | | | |
| Δ Rückprallelastizität | Prozent | | 28,5 | | 30,7 | 29,5 | 32,66 ++ |
| Δ **Rückprallelastizität -Rating** | **Prozent** | | **100** | | **108** | **104** | **114** |
| | | | | | | | |
| Delta E' relativ | MP a | -0,51 | | -0,54 | | -0,45 | -0,45 |
| E'(015%) | MP a | 11,5 | | 12,45 | | 11 | 10,8 |
| Delta E' relativ | MP a | 6,85 | | 7,15 | | 6,92 | 6,85 |
| **Delta E' relativ -Rating** | **Prozent** | **100** | | **96** | | **96** | **100** |
| | | | | | | | |
| DIN Abrieb | mm³ | 112,86 | | 103,26 | | 92,38 | 50,97 |
| **DIN Abrieb-Rating** | **Prozent** | **100** | | **91,5** | | **81,9** | **45,2** |

Der Tabelle 2 kann man entnehmen, dass erst durch die spezielle Kombination von Harz und Mercaptosilan Reifen erhalten werden können, die sich durch gutes Bremsverhalten auf nasser Fahrbahn bei besonders geringem Abrieb, das heißt bei einem sehr guten Abriebverhalten, auszeichnen. Gleichzeitig ist der Rollwiderstand verringert, so dass der Zielkonflikt zwischen Nassbremsverhalten und Rollwiderstand positiv verschoben werden konnte.

## Patentansprüche

1. Vernetzbare Kautschukmischung, insbesondere für Laufstreifen und Reifen, enthaltend:
- zumindest einen funktionalisierten Dienkautschuk,
- zumindest einen polaren Füllstoff, und
eine Kombination von i) einem Mercaptosilan und ii) einem Kohlenwasserstoffharz, welches ausgewählt ist aus der Gruppe bestehend aus Terpenphenol, Polyterpen, α-Limonen, β-Pinen, Inden-Cumaron-Harz, Phenolharz oder Pentaerythritester.

2. Kautschukmischung nach Anspruch 1, **dadurch gekennzeichnet, dass** das Mercaptosilan ein geschütztes Mercaptosilan ist.

3. Kautschukmischung nach zumindest einem der Ansprüche 1 oder 2, **dadurch gekennzeichnet, dass** der polare Füllstoff ein polarer Füllstoff auf Siliziumoxidbasis ist.

4. Kautschukmischung nach Anspruch 3, wobei diese als polaren Füllstoff Kieselsäure enthält.

5. Kautschukmischung nach zumindest einem der vorherigen Ansprüche, wobei der Dienkautschuk aus der Gruppe bestehend aus Naturkautschuk, synthetischem Polyisopren, Polybutadien, Styrol-Butadien-Kautschuk, Ethylen-Propylen-Dien-Kautschuk, Halobutylkautschuk, Chloroprenkautschuk, Isopren-Butadien-Kautschuk und/oder Styrol-Isopren-Butadien-Terpolymer.

6. Kautschukmischung nach Anspruch 5, **dadurch gekennzeichnet, dass** als Dienkautschuk emulsionspolymerisierter Styrol-Butadien-Kautschuk und/oder lösungspolymerisierter Styrol-Butadien-Kautschuk, der gegebenenfalls funktionalisiert sein kann, enthalten ist.

7. Kautschukmischung nach zumindest einem der vorherigen Ansprüche, wobei das Mercaptosilan, insbesondere das geschützte Mercaptosilan, in einer Menge von 0,1 bis 30 phr vorhanden ist.

8. Kautschukmischung nach einem der vorherigen Ansprüche, wobei das Harz in einer Menge von 0,1 bis 30 phr in der Kautschukmischung vorliegt.

9. Kautschukmischung nach zumindest einem der vorherigen Ansprüche, wobei der polare Füllstoff in einer Menge von 0,1 phr bis 200 phr vorhanden ist.

10. Kautschukmischung nach zumindest einem der vorherigen Ansprüche, wobei diese weiterhin Ruß in einer Menge von ≥ 0,1 phr enthält.

11. Kautschukmischung nach zumindest einem der vorherigen Ansprüche, **dadurch gekennzeichnet, dass** sie
0 bis 40 phr BR,
0 bis 40 phr NR,
50 bis 100 phr funktionalisierter ESBR und/oder SSBR,
0,1 bis 200 phr Kieselsäure,
0 bis 80 phr Ruß,
0,1 bis 30 phr Mercaptosilan,
0,1 bis 30 phr Kohlenwasserstoffharz, welches ausgewählt ist aus der Gruppe bestehend aus Terpenphenol, Polyterpen, α-Limonen, β-Pinen, Inden-Cumaron-Harz, Phenolharz oder Pentaerythritester und
1 bis 160 phr Weichmacher enthält.

12. Laufstreifen enthaltend zumindest zum Teil eine vulkanisierte Kautschukmischung nach zumindest einem der Ansprüche 1 bis 11.

13. Reifen zumindest zum Teil aus einer vulkanisierten Kautschukmischung nach zumindest einem der Ansprüche 1 bis 11.

14. Gummiartikel zumindest teilweise hergestellt aus einer vulkanisierten Kautschukmischung nach zumindest einem der Ansprüche 1 bis 11.

## Claims

1. Crosslinkable rubber mixture, in particular for treads and tyres, comprising:
- at least one functionalized diene rubber,
- at least one polar filler, and
a combination of i) a mercaptosilane and ii) a hydrocarbon resin selected from the group consisting of terpene-phenol, polyterpene, α-limonene, β-pinene, indene-coumarone resin, phenolic resin and pentaerythritol ester.

2. Rubber mixture according to Claim 1, **characterized in that** the mercaptosilane is a protected mercaptosilane.

3. Rubber mixture according to at least one of Claims 1 and 2, **characterized in that** the polar filler is a polar filler based on silicon oxide.

4. Rubber mixture according to Claim 3, where this comprises silica as polar filler.

5. Rubber mixture according to at least one of the preceding claims, where the diene rubber is from the group consisting of natural rubber, synthetic polyisoprene, polybutadiene, styrene-butadiene rubber, ethylene-propylene-diene rubber, halobutyl rubber, chloroprene rubber, isoprene-butadiene rubber and/or styrene-isoprene-butadiene terpolymer.

6. Rubber mixture according to Claim 5, **characterized in that** diene rubber present comprises emulsion-polymerized styrene-butadiene rubber and/or solution-polymerized styrene-butadiene rubber, which optionally can have been functionalized.

7. Rubber mixture according to at least one of the preceding claims, where the amount present of the mercaptosilane, in particular of the protected mercaptosilane, is from 0.1 to 3 phr.

8. Rubber mixture according to any of the preceding claims, where the amount of the resin present in the rubber mixture is from 0.1 to 30 phr.

9. Rubber mixture according to at least one of the preceding claims, where the amount of the polar filler present is from 0.1 to 200 phr.

10. Rubber mixture according to at least one of the preceding claims, where this moreover comprises an amount of ≥ 0.1 phr of carbon black.

11. Rubber mixture according to at least one of the preceding claims, **characterized in that** it comprises from 0 to 40 phr of BR,
from 0 to 40 phr of NR,
from 50 to 100 phr of functionalized ESBR and/or SSBR, from 0.1 to 200 phr of silica,
from 0 to 80 phr of carbon black,
from 0.1 to 30 phr of mercaptosilane,
from 0.1 to 30 phr of hydrocarbon resin selected from the group consisting of terpene-phenol, polyterpene, α-limonene, β-pinene, indene-coumarone resin, phenolic resin and pentaerythrityl ester and
from 1 to 160 phr of plasticizer.

12. Tread comprising at least to some extent a vulcanized rubber mixture according to at least one of Claims 1 to 11.

13. Tyre made at least to some extent of a vulcanized rubber mixture according to at least one of Claims 1 to 11.

14. Rubber item produced at least to some extent of a vulcanized rubber mixture according to at least one of Claims 1 to 11.

## Revendications

1. Mélange de caoutchouc réticulable, notamment pour bandes de roulement et pneus, contenant :
- au moins un caoutchouc diène fonctionnalisé,
- au moins une charge polaire et
une combinaison de i) un mercaptosilane et ii) une résine hydrocarbonée, qui est choisie dans le groupe constitué par le terpène-phénol, le polyterpène, l'α-limonène, le β-pinène, une résine indène-coumarone, une résine de phénol ou un ester de pentaérythrite.

2. Mélange de caoutchouc selon la revendication 1, **caractérisé en ce que** le mercaptosilane est un mercaptosilane protégé.

3. Mélange de caoutchouc selon au moins l'une quelconque des revendications 1 ou 2, **caractérisé en ce que** la charge polaire est une charge polaire à base d'oxyde de silicium.

4. Mélange de caoutchouc selon la revendication 3, dans lequel celui-ci contient de la silice en tant que charge polaire.

5. Mélange de caoutchouc selon au moins l'une quelconque des revendications précédentes, dans lequel le caoutchouc diène est choisi dans le groupe constitué par le caoutchouc naturel, le polyisoprène synthétique, le polybutadiène, le caoutchouc de styrène-butadiène, le caoutchouc d'éthylène-propylène-diène, le caoutchouc d'halobutyle, le caoutchouc de chloroprène, le caoutchouc d'isoprène-butadiène et/ou le terpolymère de styrène-isoprène-butadiène.

6. Mélange de caoutchouc selon la revendication 5, **caractérisé en ce qu'**un caoutchouc de styrène-butadiène polymérisé en émulsion et/ou un caoutchouc de styrène-butadiène polymérisé en solution, qui peut éventuellement être fonctionnalisé, est contenu en tant que caoutchouc diène.

7. Mélange de caoutchouc selon au moins l'une quelconque des revendications précédentes, dans lequel le mercaptosilane, notamment le mercaptosilane protégé, est présent en une quantité de 0,1 à 30 pce.

8. Mélange de caoutchouc selon au moins l'une quelconque des revendications précédentes, dans lequel la résine est présente en une quantité de 0,1 à 30 pce dans le mélange de caoutchouc.

9. Mélange de caoutchouc selon au moins l'une quelconque des revendications précédentes, dans lequel la charge polaire est présente en une quantité de 0,1 pce à 200 pce.

10. Mélange de caoutchouc selon au moins l'une quelconque des revendications précédentes, dans lequel celui-ci contient du noir de carbone en une quantité ≥ 0,1 pce.

11. Mélange de caoutchouc selon au moins l'une quelconque des revendications précédentes, **caractérisé en ce qu'**il contient
0 à 40 pce de BR,
0 à 40 pce de NR,
50 à 100 pce d'ESBR et/ou de SSBR fonctionnalisé,
0,1 à 200 pce de silice,
0 à 80 pce de noir de carbone,
0,1 à 30 pce de mercaptosilane,
0,1 à 30 pce d'une résine hydrocarbonée choisie dans le groupe constitué par le terpène-phénol, le polyterpène, l'α-limonène, le β-pinène, une résine indène-coumarone, une résine de phénol ou un ester de pentaérythrite, et
1 à 160 pce d'un plastifiant.

12. Bande de roulement contenant au moins en partie un mélange de caoutchouc vulcanisé selon au moins l'une quelconque des revendications 1 à 11.

13. Pneu constitué au moins en partie d'un mélange de caoutchouc vulcanisé selon au moins l'une quelconque des revendications 1 à 11.

14. Article en caoutchouc fabriqué au moins en partie à partir d'un mélange de caoutchouc vulcanisé selon au moins l'une quelconque des revendications 1 à 11.
